# EUROPÄISCHE PATENTSCHRIFT

(11) **EP 2 561 564 B1**
(45) Veröffentlichungstag und Bekanntmachung des Hinweises auf die Patenterteilung: **29.05.2019**
(21) Anmeldenummer: 11715228.0
(22) Anmeldetag: 18.04.2011
(51) Int. Cl.: H01M 2/16, H01M 4/26, H01M 6/06, H01M 6/40, H01M 6/12

(54) **DRUCKBARER ELEKTROLYT**
PRINTABLE ELECTROLYTE
ÉLECTROLYTE IMPRIMABLE

(30) Priorität: 20.04.2010 DE 102010018071
(43) Veröffentlichungstag der Anmeldung: 27.02.2013
(73) Patentinhaber: VARTA Microbattery GmbH, 73479 Ellwangen (DE)
(72) Erfinder: WENDLER, Michael, 73765 Neuhausen (DE); KREBS, Martin, 73494 Rosenberg (DE)
(74) Vertreter: Patentanwaltskanzlei Cartagena
(86) Internationale Anmeldenummer: PCT/EP2011/056144
(87) Internationale Veröffentlichungsnummer: WO 2011/131627

(56) Entgegenhaltungen:
- EP-A1- 1 826 842
- EP-A2- 1 359 632
- WO-A1-01/11702
- WO-A1-01/89022
- WO-A1-2006/105966
- WO-A1-2010/142851
- DE-A1- 10 313 005
- JP-A- 2003 007 279
- US-A1- 2006 019 169
- SOUQUET J L ET AL: "Thin film lithium batteries", SOLID STATE IONICS, NORTH HOLLAND PUB. COMPANY. AMSTERDAM; NL, NL, Bd. 148, Nr. 3-4, 2. Juni 2002 (2002-06-02), Seiten 375-379, XP004361834, ISSN: 0167-2738, DOI: DOI:10.1016/S0167-2738(02)00076-0
- SAIKIA D ET AL: "Ionic transport in P(VDF-HFP)-PMMA-LiCF3SO3-(PC+DEC)-SiO2 composite gel polymer electrolyte", EUROPEAN POLYMER JOURNAL, PERGAMON PRESS LTD. OXFORD, GB, Bd. 41, Nr. 3, 1. März 2005 (2005-03-01), Seiten 563-568, XP004719834, ISSN: 0014-3057, DOI: DOI:10.1016/J.EURPOLYMJ.2004.10.029

## Beschreibung

Die Erfindung betrifft eine Druckpaste, die Anwendung bei der Herstellung von gedruckten Batterien findet, sowie ein Verfahren zur Herstellung solcher Batterien.

Batterien sind in den unterschiedlichsten Ausführungsformen bekannt. Unter anderem gibt es auch sogenannte gedruckte Batterien, zu deren Herstellung Funktionsteile, insbesondere die Elektroden und/oder erforderliche Leiterbahnen, auf ein entsprechendes Substrat aufgedruckt werden. In der Regel weisen gedruckte Batterien einen mehrschichtigen Aufbau auf. In herkömmlicher Bauweise umfasst eine gedruckte Batterie meist zwei Stromkollektorebenen, zwei Elektrodenebenen und eine Separatorebene. Letztere ist zwischen den zwei Elektrodenebenen angeordnet, während die Stromkollektoren die Ober- bzw. die Unterseite der Batterie bilden. Eine Batterie mit einem solchen Aufbau ist beispielsweise in der US 4119770 A beschrieben.

Deutlich flachere Batterien, bei denen sich die Elektroden nebeneinander auf einem flächigen, elektrisch nicht leitenden Substrat befinden, sind der WO 2006/105966 A1 zu entnehmen. Die Elektroden sind über einen ionenleitfähigen Elektrolyten miteinander verbunden, bei dem es sich beispielsweise um eine gelartige Zinkchloridpaste handeln kann. In aller Regel ist der Elektrolyt dabei durch ein vlies- oder netzartiges Material verstärkt und stabilisiert.

Der in der WO 2006/105966 A1 beschriebene Elektrolyt hat ausschließlich die Funktion, zwischen entgegengesetzt gepolten Elektroden eine ionenleitfähige Verbindung bereitzustellen. Räumlich sind die Elektroden klar voneinander getrennt, es gibt keine direkten Berührungspunkte, über die ein Kurzschluss erfolgen könnte. Anders verhält es sich bei Batterien mit stapelartigem Aufbau, wie sie in der US 4119770 A beschrieben sind. Hier hat der Separator nicht nur die Aufgabe, zwischen entgegengesetzt gepolten Elektroden einen ionenleitfähige Verbindung bereitzustellen, ebenso wichtig ist seine Funktion, die Elektroden räumlich voneinander zu trennen, um einen elektrischen Kurzschluss zu unterbinden. Zu diesem Zweck kamen in der Vergangenheit als Separatoren beispielsweise poröse Folien wie die in der US 4119770 A verwendete Zellophanfolie zum Einsatz. Alternativ wurde zumindest eine vlies- oder netzartige Trennschicht, wie sie in der WO 2006/105966 A1 erwähnt ist, als mechanische Verstärkung zwischen den Elektroden angeordnet.

Rein funktionell gibt es gegen derartige Separatoren nichts einzuwenden, problematisch ist allerdings, dass die Anordnung solcher fester Separatorelemente zwischen zwei Elektroden nur in einem separaten Arbeitsschritt erfolgen kann, der den Produktionsablauf bei der Herstellung von Batterien mit ansonsten ausschließlich über Druck herstellbaren Funktionsteilen stört. Im Hinblick darauf, dass Anwendungen für gedruckte Batterien insbesondere im Niedrigstpreisbereich, beispielsweise bei der Herstellung von elektronischen Etiketten, zu finden sind, sind die mit der Störung verbundenen Verzögerungen und die damit verbundene Erhöhung der Produktionskosten entsprechender gedruckter Batterien sehr nachteilhaft.

Aus der EP 1 826 842 A1 sind Separatoren für elektrochemische Zellen bekannt, welche eine Zellsicherheit auch bei Temperaturen oberhalb von 150°C gewährleisten. Gemäß einer bevorzugten Ausführungsform umfassen solche Separatoren mindestens ein elektrisch nicht leitendes Sicherheitsharz, Aluminiumfasern sowie gegebenenfalls einen Binder. Zur Herstellung solcher Separatoren wird aus einem Slurry enthaltend die Aluminiumfasern auf einem Substrat eine dünne Schicht gebildet und getrocknet.

Aus der WO 2010/142851 A1 ist eine Druckpaste zur Herstellung einer mangandioxidbasierten Kathodenschicht bekannt. Diese umfasst neben Mangandioxidpartikeln Wasser samt einem darin gelösten Leitsalz.

Der vorliegenden Erfindung lag die Aufgabe zugrunde, eine technische Lösung bereitzustellen, die es erlaubt, gedruckte Batterien einfacher und kostengünstiger herzustellen.

Diese Aufgabe wird gelöst durch die Druckpaste mit den Merkmalen des Anspruchs 1. Bevorzugte Ausführungsformen der erfindungsgemäßen Druckpaste sind in den abhängigen Ansprüchen 2 bis 8 angegeben. Auch das Verfahren mit den Merkmalen des Anspruchs 9 und die Verwendung mit den Merkmalen des Anspruchs 10 sind von der vorliegenden Erfindung umfasst.

Mit einer erfindungsgemäßen Druckpaste lassen sich Elektrolytschichten für gedruckte Batterien problemlos über ein Druckverfahren aufbringen. Das Verbinden entgegengesetzt gepolter Elektroden in einem separaten Arbeitsschritt, beispielsweise durch Ablegen eines Folienseparators, kann vollständig entfallen. Statt dessen kann z.B. eine mehrlagige Batterie in einem Arbeitsgang hergestellt werden, indem auf ein Substrat zunächst eine erste Elektrode durch Druck aufgebracht wird, diese Elektrode anschließend mit der erfindungsgemäßen Druckpaste unter Ausbildung einer Elektrolytschicht überdruckt wird, um auf diese abschließend eine zur ersten Elektrode entgegengesetzt gepolte zweite Elektrode aufzudrucken. Die Herstellung aller Funktionsteile einer Batterie kann somit im Rahmen eines einheitlichen Druckprozesses erfolgen. Die damit verbundenen Vorteile sind offensichtlich.

Damit die aus der Druckpaste hergestellte Elektrolytschicht sowohl die eingangs erwähnte Funktion als ionenleitfähige Verbindung zwischen entgegengesetzt gepolten Elektroden als auch die Funktion als Abstandshalter zur Verhinderung eines elektrischen Kurzschlusses erfüllen kann, bedarf es einer speziellen Kombination aus funktionalen Bestandteilen. So umfasst eine erfindungsgemäße Druckpaste stets ein Lösungsmittel, mindestens ein Leitsalz, das in dem Lösungsmittel gelöst ist, sowie Partikel und/oder Fasern, die in dem Lösungsmittel bei Raumtemperatur zumindest nahezu, vorzugsweise vollständig, unlöslich und dabei elektrisch nicht leitend sind. Das mindestens eine Leitsalz übernimmt dabei die Funktion des lonenleiters, die Partikel und/oder die Fasern die Funktion des Abstandshalters.

Überraschenderweise wurde gefunden, dass sich ein Separator aus beispielsweise einer mikroporösen Folie oder aus einem Vlies oder einem Netz, das mit einer ein Leitsalz enthaltenden Lösung getränkt ist, sich funktionell ohne weiteres durch eine aus der erfindungsgemäßen Druckpaste herstellbare Elektrolytschicht ersetzen lässt, die die erwähnten Partikel und/oder Fasern aufweist. In der erfindungsgemäßen Paste enthaltene Partikel und/oder Fasern können beim Druckprozess eine dreidimensionale Matrix ausbilden, die der entstehenden Elektrolytschicht eine feste Struktur und eine ausreichend hohe mechanische Festigkeit verleiht, um Kontakte zwischen entgegengesetzt gepolten Elektroden zu unterbinden. Voraussetzung ist, wie bereits gesagt, dass die Partikel und/oder Fasern elektrisch nicht leitend sind. Weiterhin sollten sie gegenüber der Lösung aus dem mindestens einen Leitsalz und dem Lösungsmittel zumindest bei Raumtemperatur chemisch stabil sein, sich insbesondere darin nicht oder nur sehr wenig lösen.

Die Partikel und/oder die Fasern sind in der Druckpaste vorzugsweise in einem Anteil zwischen 1 Gew.-% und 95 Gew.-%, bevorzugt in einem Anteil zwischen 10 Gew.-% und 95 Gew.-%, besonders bevorzugt in einem Anteil zwischen 10 Gew.-% und 75 Gew.-%, insbesondere zwischen 10 Gew.-% und 50 Gew.-%, enthalten. (jeweils bezogen auf die Gesamtmasse der Druckpaste inclusive Lösungsmittel, also die Summe aus der Masse des Leitsalzes, der Masse unlöslicher Partikel und/oder Fasern, der Masse des Lösungsmittels und gegebenenfalls der Masse weiterer fakultativer Pastenbestandteile, wie sie unten noch definiert werden). Besonders bevorzugt sind die Partikel und/oder Fasern in einem Anteil von mindestens 35 Gew.-%, insbesondere in einem Anteil zwischen 35 Gew.-% und 95 Gew.-%, besonders bevorzugt in einem Anteil zwischen 35 Gew.-% und 75 Gew.-%, enthalten. Dabei ist es unerheblich, ob ausschließlich Partikel oder Fasern oder etwa eine Mischung aus Partikeln und Fasern zum Einsatz kommt.

Bevorzugt ist hingegen, dass die Partikel und/oder die Fasern einen mittleren Durchmesser bzw. im Falle der Fasern eine mittlere Länge zwischen 1 µm und 50 µm aufweisen. Besonders bevorzugt ist die erfindungsgemäße Druckpaste dabei frei von Partikeln und/oder Fasern, die einen Durchmesser und/oder eine Länge von mehr als 120 µm aufweisen. Idealerweise liegt der maximale Durchmesser und/oder die maximale Länge der in der Druckpaste enthaltenen Partikel und/oder Fasern bei 80 µm. Dies hängt damit zusammen, dass die erfindungsgemäße Druckpaste insbesondere zur Verarbeitung mittels Siebdruck vorgesehen ist.

Beim Siebdruck handelt es sich bekanntlich um ein Druckverfahren, bei dem Druckpasten mittels eines Rakels durch ein feinmaschiges Gewebe hindurch auf das zu bedruckende Material gepresst werden. An denjenigen Stellen des Gewebes, an denen dem Druckbild entsprechend keine Paste aufgedruckt werden soll, werden die Maschenöffnungen des Gewebes durch eine Schablone farbundurchlässig gemacht. An den übrigen Stellen sollte die Druckpaste dagegen die Maschenöffnungen problemlos durchdringen können. Damit es nicht zu einem Verstopfen der Maschenöffnungen kommen kann, sollten die in der Druckpaste enthaltenen festen Bestandteile eine gewisse Maximalgröße, die unter der Maschenöffnungsweite liegen sollte, nicht überschreiten.

Die Partikel und/oder Fasern in der Druckpaste können grundsätzlich aus den unterschiedlichsten Materialien bestehen, sofern die oben genannten Anforderungen (elektrisch nicht leitende Eigenschaften sowie Unlöslichkeit in bzw. chemische Beständigkeit gegenüber der Leitsalzlösung) eingehalten werden. Entsprechend können die Partikel und/oder Fasern sowohl aus einem organischen als auch aus einem anorganischen Feststoff bestehen. Es ist beispielsweise möglich, Fasern aus organischen Materialien mit anorganischen Partikeln zu mischen oder umgekehrt.

Besonders bevorzugt umfasst der anorganische Feststoff mindestens eine Komponente aus der Gruppe mit keramischen Feststoffen, in Wasser nahezu oder vollständig unlöslichen Salzen, Glas, Basalt und Kohlenstoff. Der Begriff "keramische Feststoffe" soll dabei sämtliche Feststoffe umfassen, die zur Herstellung keramischer Produkte dienen können, darunter silikatische Materialien wie Aluminiumsilikate, Gläser und Tonmineralien, oxidische Rohstoffe wie Titandioxid und Aluminiumoxid sowie nicht-oxidische Materialien wie Siliziumcarbid oder Siliziumnitrid.

Der organische Feststoff in einer erfindungsgemäßen Druckpaste weist in bevorzugten Ausführungsformen mindestens eine Komponente aus der Gruppe mit synthetischen Kunststoffen, halbsynthetischen Kunststoffen und Naturstoffen auf.

Der Begriff "bei Raumtemperatur nahezu oder vollständig unlöslich" meint im Rahmen der vorliegenden Anmeldung, dass bei Raumtemperatur in einem entsprechenden Lösungsmittel eine allenfalls geringe, vorzugsweise gar keine, Löslichkeit besteht. Die Löslichkeit erfindungsgemäß einsetzbarer Partikel und/oder Fasern, insbesondere der erwähnten in Wasser nahezu oder vollständig unlöslichen Salze, sollte idealerweise die Löslichkeit von Calciumcarbonat in Wasser bei Raumtemperatur nicht übersteigen Bei Calciumcarbonat handelt es sich im Übrigen um ein besonders bevorzugtes Beispiel für einen anorganischen Feststoff, der als Komponente mit Abstandshalterfunktion insbesondere in Partikelform in einer erfindungsgemäßen Druckpaste enthalten sein kann.

Der Begriff "Faser" ist im Rahmen der vorliegenden Anmeldung sehr breit auszulegen, es sollen darunter längliche Gebilde verstanden werden, die im Verhältnis zu ihrer Länge sehr dünn sind. Gut einsetzbar sind beispielsweise Fasern aus synthetischen Polymeren wie z.B. Polyamidfasern oder Polypropylenfasern. Alternativ können auch Fasern anorganischen oder organischen Ursprungs wie beispielsweise Glasfasern, Keramikfasern, Fasern aus Kohlenstoff oder Zellulosefasern zum Einsatz kommen.

Bei dem Lösungsmittel in einer erfindungsgemäßen Druckpaste handelt es sich um Wasser.

Bei dem Leitsalz in einer erfindungsgemäßen Druckpaste handelt es sich bevorzugt um mindestens eine Verbindung, die bei Raumtemperatur in dem in der erfindungsgemäßen Druckpaste enthaltenen Lösungsmittel löslich ist bzw. die in diesem in Form von solvatisierten Ionen vorliegt. Es umfasst vorzugsweise mindestens eine Komponente aus der Gruppe mit Zinkchlorid, Kaliumhydroxid und Natriumhydroxid. Darüber hinaus sind gegebenenfalls auch noch Leitsalze wie Lithiumtetrafluoroborat, die ebenfalls insbesondere aus dem Bereich der Lithium-Ionen-Batterien bekannt sind, als Leitsalz im Rahmen der vorliegenden Erfindung einsetzbar.

Neben Leitsalzen, einem Lösungsmittel und den beschriebenen Partikeln und/oder Fasern kann die erfindungsgemäße Druckpaste zusätzlich noch einen Binder und/oder ein oder mehrere Additive umfassen. Während der Binder insbesondere dazu dient, der aus der Druckpaste herstellbaren Elektrolytschicht eine bessere mechanische Stabilität, idealerweise eine bessere mechanische Belastbarkeit und Flexibilität zu verleihen, dienen die Additive insbesondere dazu, die Verarbeitungseigenschaften der erfindungsgemäßen Druckpaste zu variieren. Entsprechend können als Additive grundsätzlich sämtliche für Druckpasten geeignete Additive zum Einsatz kommen, beispielsweise Rheologiehilfsmittel, mit denen die Viskosität der erfindungsgemäßen Druckpaste angepasst werden kann. Bei dem Binder kann es sich beispielsweise um einen organischen Binder wie Carboxymethylzellulose handeln. Auch andere, gegebenenfalls auch anorganische Komponenten wie Siliziumdioxid, sind als Zusätze mit bindenden Eigenschaften geeignet.

Eine aus der erfindungsgemäßen Druckpaste herstellbare Batterie weist eine Elektrolytschicht auf, die neben Wasser als Lösungsmittel mindestens ein Leitsalz, das in dem Lösungsmittel gelöst ist, sowie Partikel und/oder Fasern aufweist, die in dem Lösungsmittel bei Raumtemperatur zumindest nahezu, vorzugsweise vollständig, unlöslich und elektrisch nicht leitend sind. Betreffend die Eigenschaften und bevorzugten Merkmale der Komponenten Lösungsmittel, Leitsalz sowie unlösliche Partikel und/oder Fasern wird zur Vermeidung von Wiederholungen auf die obigen Ausführungen verwiesen.

Wie bereits erwähnt, bilden die Partikel und/oder die Fasern in der Elektrolytschicht eine Matrix aus, die ausreichend gute separierende Eigenschaften aufweist, um einen Kurzsschluss zwischen entgegengesetzten Elektroden auf den beiden Seiten der Elektrolytschicht zu verhindern.

Die Elektrolytschicht in der Batterie weist bevorzugt eine Dicke zwischen 10 µm und 500 µm, insbesondere zwischen 10 µm und 100 µm, auf. Besonders bevorzugt weist die Batterie einen stapelartigen Aufbau auf, beispielsweise einen Aufbau, bei dem auf einem Substrat eine erste Elektrode angeordnet ist, die mindestens teilweise, vorzugsweise vollständig, von der Elektrolytschicht abgedeckt ist, auf welcher wiederum eine zur ersten Elektrode entgegengesetzt gepolte zweite Elektrode aufgebracht ist. Positive und negative Elektroden einer erfindungsgemäßen Batterie sowie die Elektrolytschicht können somit in bevorzugten Ausführungsformen in verschiedenen Ebenen übereinander angeordnet sein.

Alternativ kann die Batterie aber auch einen Aufbau wie die in der WO2006/105966 A1 beschriebenen Batterien aufweisen, also einen Aufbau, bei dem sich die Elektroden nebeneinander auf einem flächigen, elektrisch nicht leitenden Substrat befinden. Die entsprechenden Ausführungen in der WO 2006/105966 A1 werden hiermit durch Bezugnahme zum Inhalt dieser Beschreibung gemacht.

Die Batterie weist weiterhin in aller Regel noch Leiterbahnen auf, die als Stromableiter bzw. als Stromkollektoren dienen. Diese Leiterbahnen können auf verschiedene Weise realisiert werden. Zum einen ist es möglich, elektrische Folien, insbesondere Metallfolien, als solche Leiterbahnen zu verwenden. Zum anderen kann es sich bei den Leiterbahnen auch um dünne Metallschichten handeln, die mittels eines üblichen Metallisierungsverfahrens auf ein Substrat aufbringbar sind. Schließlich können die Leiterbahnen natürlich auch gedruckt werden, beispielsweise unter Verwendung einer Silberpartikel enthaltenden Paste.

Unter dem Begriff Batterie sollen vorliegend sowohl galvanische Einzelzellen als auch die Zusammenschaltung mehrerer bevorzugt gleichartiger galvanischer Einzelzellen verstanden werden.

Die Batterie kann grundsätzlich wiederaufladbar oder nicht wiederaufladbar sein. Besonders bevorzugt handelt es sich bei der Batterie um eine Zink-Braunstein-Batterie.

Herstellen lässt sich die Batterie insbesondere nach einem erfindungsgemäßen Verfahren, das sich dadurch auszeichnet, dass die Elektrolytschicht aus einer erfindungsgemäßen Druckpaste gedruckt wird. Bevorzugt erfolgt das Aufdrucken der Elektrolytschicht über ein Siebdruckverfahren. Dabei können die von der Elektrolytschicht getrennten Elektroden ebenfalls durch Druck hergestellt werden, müssen aber nicht.

Weitere Merkmale und Vorteile der beschriebenen Erfindung ergeben sich aus der Zeichnung sowie aus der nachfolgenden Beschreibung bevorzugter Ausführungsformen in Verbindung mit den Unteransprüchen. Hierbei können Merkmale der Erfindung jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

Zur Herstellung einer Batterie wurde zunächst eine bevorzugte Ausführungsform einer erfindungsgemäßen Druckpaste hergestellt.

Dazu wurden 77,8 Gewichtsteile einer 50%igen Zinkchloridlösung mit 3,4 Gewichtsteilen amorphem Siliziumdioxid und 18,8 Gewichtsteile eines Calciumcarbonatpulvers vermischt. Das gelöste Zinkchlorid sollte die erforderliche lonenleitfähigkeit des Elektrolyten in der herzustellenden erfindungsgemäßen Batterie gewährleisten. Bei Calciumcarbonat handelt es sich bekanntlich um einen anorganischen Feststoff, der in Wasser bei Raumtemperatur nahezu unlöslich ist. Darüber hinaus weist Calciumcarbonat auch praktisch keine elektrische Eigenleitfähigkeit auf. Das verwendete Calciumcarbonatpulver bestand zu ca. 50 % aus einem Pulver mit einer mittleren Korngröße < 11 µm und zu ca. weiteren 50 % aus einem Pulver mit einer mittleren Korngröße < 23 µm. Es wies also eine bimodale Verteilung auf. Das Siliziumdioxid dient insbesondere zur Einstellung der Viskosität der erfindungsgemäßen Paste.

Mit einer solchen Paste wurde eine Zinkanode überdruckt, die, ebenfalls über ein Druckverfahren, auf eine Trägerfolie auf Kunststoff aufgebracht worden war. Die entstehende Elektrolytschicht wies eine Dicke von ca. 50 µm auf. Die Trägerfolie wies dabei elektrische Leiterbahnen auf, die zur elektrischen Kontaktierung der Batterie dienen. Eine zweite, gleiche Folie mit einer darauf aufgebrachten Braunsteinkathode wurde anschließend mit der ersten, mit dem Elektrolyten beschichteten Folie kombiniert. Die beiden Folien wurden zusammengefügt und versiegelt.

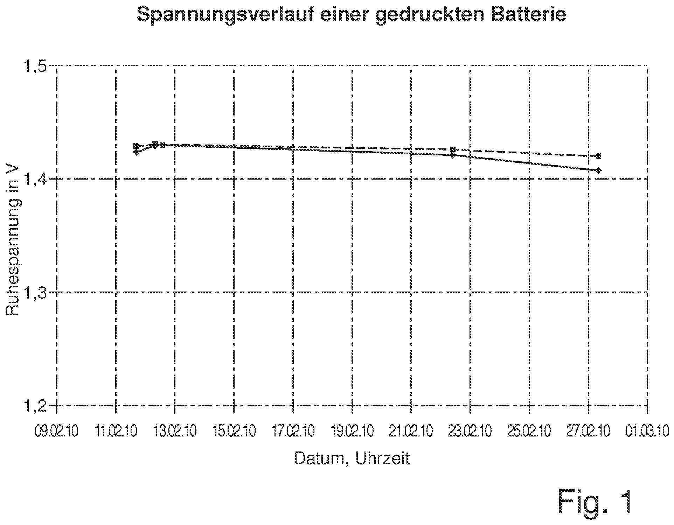

Die resultierende Zelle wies eine Spannung von 1,424 V auf. Bei zwei gemäß obigem Verfahren hergestellten Testzellen blieb diese Spannung über einen Zeitraum von 16 Tagen jeweils nahezu konstant (siehe Fig. 1), was bedeutet, dass der Elektrolyt hervorragende elektrisch isolierende Eigenschaften aufweist. Batterien mit einem solchen Elektrolyten unterliegen nahezu keiner Selbstentladung.

## Patentansprüche

1. Druckpaste für die Herstellung einer Elektrolytschicht einer Batterie, umfassend Wasser als Lösungsmittel, mindestens ein darin gelöstes Leitsalz sowie Partikel und/oder Fasern, die in Wasser bei Raumtemperatur zumindest nahezu, vorzugsweise vollständig, unlöslich und elektrisch nicht leitend sind.

2. Druckpaste nach Anspruch 1, **dadurch gekennzeichnet, dass** die Partikel und/oder Fasern in der Druckpaste in einem Anteil zwischen 1 Gew.-% und 75 Gew.-% enthalten sind.

3. Druckpaste nach Anspruch 1 oder Anspruch 2, **dadurch gekennzeichnet, dass** die Partikel und/oder Fasern einen mittleren Durchmesser und/oder eine mittlere Länge zwischen 1 µm und 50 µm aufweisen, wobei die Paste bevorzugt frei von Partikeln und/oder Fasern mit einem Durchmesser und/ oder einer Länge > 120 µm, besonders bevorzugt > 80 µm, ist.

4. Druckpaste nach einem der vorhergehenden Ansprüche, **dadurch gekennzeichnet, dass** die Partikel und Fasern aus einem organischen und/oder anorganischen Feststoff bestehen.

5. Druckpaste nach Anspruch 4, **dadurch gekennzeichnet, dass** der anorganische Feststoff mindestens eine Komponente aus der Gruppe mit keramischen Feststoffen, in Wasser nahezu oder vollständig unlöslichen Salzen, Glas, Basalt und Kohlenstoff umfasst.

6. Druckpaste nach Anspruch 4, **dadurch gekennzeichnet, dass** der organische Feststoff mindestens eine Komponente aus der Gruppe mit synthetischen Kunststoffen, halbsynthetischen Kunststoffen und Naturstoffen umfasst.

7. Druckpaste nach einem der vorhergehenden Ansprüche, **dadurch gekennzeichnet, dass** das Leitsalz mindestens eine Komponente aus der Gruppe mit Zinkchlorid, Kaliumhydroxyd und Natriumhydroxyd umfasst.

8. Druckpaste nach einem der vorhergehenden Ansprüche, **dadurch gekennzeichnet, dass** sie mindestens einen Binder und/oder mindestens ein Additiv, insbesondere ein Rheologieadditiv, enthält.

9. Verfahren zur Herstellung einer Batterie, die eine Elektrolytschicht aufweist, die neben Wasser mindestens ein darin gelöstes Leitsalz sowie Partikel und/oder Fasern, die in Wasser bei Raumtemperatur zumindest nahezu, vorzugsweise vollständig, unlöslich und elektrisch nicht leitend sind, enthält, wobei die Elektrolytschicht aus einer Druckpaste nach einem der Ansprüche 1 bis 8 gedruckt wird, vorzugsweise über ein Siebdruckverfahren.

10. Verwendung einer Druckpaste gemäß einem der Ansprüche 1 bis 8 für die Herstellung einer Elektrolytschicht einer Batterie.

## Claims

1. Printing paste for the production of an electrolyte layer of a battery, comprising water as solvent, at least one conductive salt dissolved therein and particles and/or fibres that are at least virtually, preferably entirely, insoluble in water at room temperature and are electrically nonconductive.

2. Printing paste according to Claim 1, **characterized in that** the particles and/or fibres are present in the printing paste in a proportion between 1% by weight and 75% by weight.

3. Printing paste according to Claim 1 or Claim 2, **characterized in that** the particles and/or fibres have an average diameter and/or an average length between 1 µm and 50 µm, where the paste is preferably free of particles and/or fibres having a diameter and/or a length > 120 µm, more preferably > 80 µm.

4. Printing paste according to any of the preceding claims, **characterized in that** the particles and fibres consist of an organic and/or inorganic solid.

5. Printing paste according to Claim 4, **characterized in that** the inorganic solid comprises at least one component from the group comprising ceramic solids, virtually or entirely water-insoluble salts, glass, basalt and carbon.

6. Printing paste according to Claim 4, **characterized in that** the organic solid comprises at least one component from the group comprising synthetic plastics, semisynthetic plastics and natural substances.

7. Printing paste according to any of the preceding claims, **characterized in that** the conductive salt comprises at least one component from the group comprising zinc chloride, potassium hydroxide and sodium hydroxide.

8. Printing paste according to any of the preceding claims, **characterized in that** it comprises at least one binder and/or at least one additive, especially a rheology additive.

9. Process for producing a battery including an electrolyte layer comprising, as well as water, at least one conductive salt dissolved therein and particles and/or fibres that are at least virtually, preferably entirely, insoluble in water at room temperature and are electrically nonconductive, wherein the electrolyte layer is printed from a printing paste according to any of Claims 1 to 8, preferably via a screenprinting process.

10. Use of a printing paste according to any of Claims 1 to 8 for the production of an electrolyte layer of a battery.

## Revendications

1. Pâte d'impression pour la fabrication d'une couche électrolytique d'une batterie, comprenant de l'eau en tant que solvant, au moins un sel conducteur dissous dans celle-ci, ainsi que des particules et/ou des fibres, qui sont au moins presque, de préférence entièrement, insolubles dans l'eau à température ambiante et électriquement non conductrices.

2. Pâte d'impression selon la revendication 1, **caractérisée en ce que** les particules et/ou les fibres sont contenues dans la pâte d'impression en une proportion comprise entre 1 % en poids et 75 % en poids.

3. Pâte d'impression selon la revendication 1 ou la revendication 2, **caractérisée en ce que** les particules et/ou les fibres présentent un diamètre moyen et/ou une longueur moyenne compris entre 1 µm et 50 µm, la pâte étant de préférence exempte de particules et/ou de fibres ayant un diamètre et/ou une longueur > 120 µm, de manière particulièrement préférée > 80 µm.

4. Pâte d'impression selon l'une quelconque des revendications précédentes, **caractérisée en ce que** les particules et les fibres sont constituées par un solide organique et/ou inorganique.

5. Pâte d'impression selon la revendication 4, **caractérisée en ce que** le solide inorganique comprend au moins un composant du groupe comprenant les solides céramiques, les sels presque ou entièrement insolubles dans l'eau, le verre, le basalte et le carbone.

6. Pâte d'impression selon la revendication 4, **caractérisée en ce que** le solide organique comprend au moins un composant du groupe comprenant les plastiques synthétiques, les plastiques semi-synthétiques et les substances naturelles

7. Pâte d'impression selon l'une quelconque des revendications précédentes, **caractérisée en ce que** le sel conducteur comprend au moins un composant du groupe comprenant le chlorure de zinc, l'hydroxyde de potassium et l'hydroxyde de sodium.

8. Pâte d'impression selon l'une quelconque des revendications précédentes, **caractérisée en ce qu'**elle contient au moins un liant et/ou au moins un additif, notamment un additif de rhéologie.

9. Procédé de fabrication d'une batterie, qui comprend une couche électrolytique, qui comprend en plus de l'eau au moins un sel conducteur dissous dans celle-ci, ainsi que des particules et/ou des fibres, qui sont au moins presque, de préférence entièrement, insolubles dans l'eau à température ambiante et électriquement non conductrices, la couche électrolytique étant imprimée à partir d'une pâte d'impression selon l'une quelconque des revendications 1 à 8, de préférence par un procédé de sérigraphie.

10. Utilisation d'une pâte d'impression selon l'une quelconque des revendications 1 à 8 pour la fabrication d'une couche électrolytique d'une batterie.
